# FASCICULE DE BREVET EUROPEEN

(11) **EP 2 313 757 B1**
(45) Date de publication et mention de la délivrance du brevet: **18.01.2012**
(21) Numéro de dépôt: 09804577.6
(22) Date de dépôt: 06.08.2009
(51) Int. Cl.: G01N 3/12

(54) **MACHINE D'ESSAI POUR APPLIQUER UNE PRESSION INTERNE UNIFORME A UN TUBE**
TESTMASCHINE ZUR ANWENDUNG EINES GLEICHMÄSSIGEN INNEREN DRUCKS AUF EIN ROHR
TEST MACHINE FOR APPLYING UNIFORM INTERNAL PRESSURE ON A TUBE

(30) Priorité: 08.08.2008 FR 0855495
(43) Date de publication de la demande: 27.04.2011
(73) Titulaire: Commissariat à l'Énergie Atomique et aux Énergies Alternatives, 75015 Paris (FR)
(72) Inventeur: RIGAUD, Pierre, F-26130 Solerieux (FR)
(74) Mandataire: Ilgart, Jean-Christophe
(86) Numéro de dépôt international: PCT/EP2009/060210
(87) Numéro de publication internationale: WO 2010/015677

(56) Documents cités:
- WO-A-01/33194
- FR-A- 2 087 758
- GB-A- 1 478 418
- US-A1- 2001 037 687

## Description

L'invention trouve application à une machine d'essai pour appliquer une pression interne uniforme à un tube, les essais pouvant concerner l'étude de la rupture, de dommages sans rupture ou du fluage.

Une difficulté de tels essais consiste à appliquer la pression sans produire d'effets de fond perturbant les résultats, ni gêner le rétreint axial, lié à l'effet Poisson, qu'on observe quand une traction circonférentielle est exercée.

Plusieurs méthodes d'essai existent déjà. L'une d'entre elles est réalisable avec une machine de traction. Deux pièces dont la section est en demi-disque sont placées dans le tube à des positions diamétralement opposées, et écartées l'une de l'autre par la machine. L'arrondi des pièces d'essai étant identique à celui du tube, elles appuient sur toute leur largeur sur sa face interne et exercent une pression interne par leur contact. Cette façon de procéder est commode, mais elle présente l'inconvénient que la pression, résultant de forces d'écartement opposées, n'est pas uniforme sur la circonférence du tube ; une partie du tube située entre eux est même complètement dépourvue de pression interne et soumise en pratique à une composante de flexion en plus de la traction. Cela introduit une incertitude sur les résultats, et complique leur interpétation. De plus, ces essais sont menés avec des hauteurs petites des tubes, de l'ordre de 15 mm seulement, ce qui peut ne pas être représentatif.

On a aussi appliqué des pressions internes à des tubes par la compression de fluide au moyen de pompes. Cela impose de clore la cavité du tube par un serrage étanche de ses extrémités au moyen de brides. Mais le serrage produit de la flexion axiale et un effet de fond dû à la contrainte aux extrémités du tube, et il est aussi susceptible d'empêcher le rétreint axial pendant l'essai. Il faut ajouter que l'utilisation de pompes est moins commode que celle d'une machine de traction.

L'art antérieur connu comprend aussi les documents FR-A-2 087 758, GB-A-1 478 418, WO-A-01/33994 et US-A-2001/037687.

On a avant tout cherché, en réalisant l'invention, à proposer une méthode d'essai donnant des résultats exacts par la suppression de l'effet de fond et une uniformité réelle et complète de la pression appliquée sur le tube. On a cherché à pouvoir réaliser cet essai avec une machine de traction et de compression. On a encore cherché un dispositif simple, et permettant des montages et démontages rapides pour accomplir des essais avec des séries importantes d'échantillons.

Sous un aspect général, l'invention est une machine d'essai pour appliquer une pression interne uniforme à un tube, comprenant un corps, un piston coulissant dans le corps, caractérisé en ce qu'il comprend une chemise usinée dans le corps, dont le piston fait varier un volume en coulissant, une vessie élastique annulaire entourant une périphérie du corps, la périphérie du corps comprenant deux nervures circulaires et un renfoncement séparant les nervures et communiquant avec la chemise, la machine comprenant encore deux brides fixées au corps à deux extrémités opposées et comprenant des contre-brides annulaires entourant respectivement les nervures, la vessie étant serrée à chacune des deux extrémités opposées entre une des nervures et une des contre-brides.

L'invention va maintenant être décrite en liaison aux figures, dont :

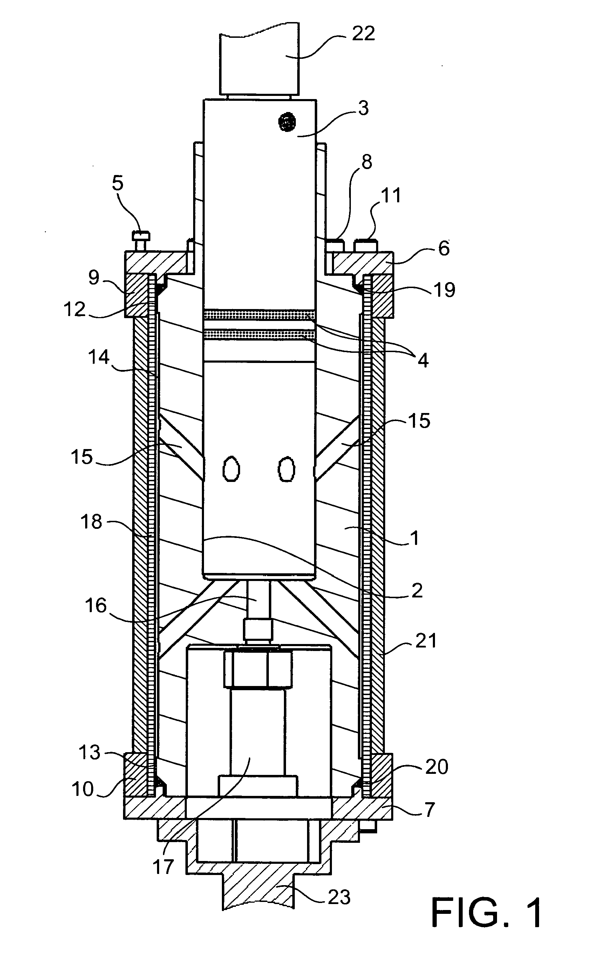

- la figure 1 est une vue générale du dispositif en coupe, et
- la figure 2 représente un détail du construction.

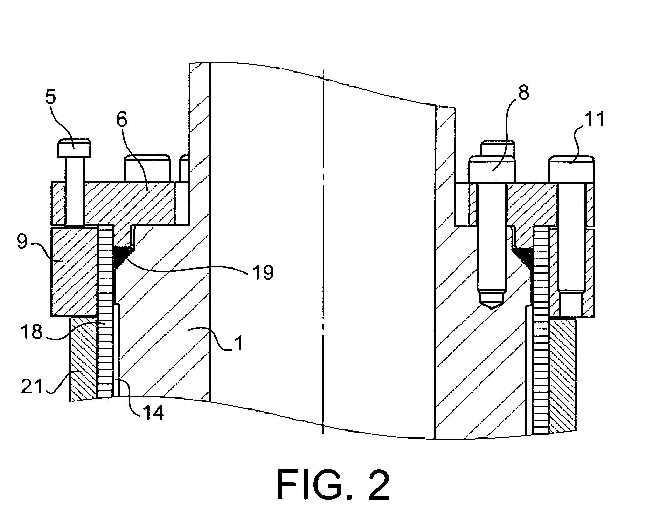

Le dispositif de l'invention comprend un corps 1 central cylindrique, au coeur duquel est usinée une chemise 2, elle aussi cylindrique. Un piston 3 coulisse dans le corps 1 de manière à faire varier le volume interne à la chemise 2. Il est muni de joints 4 permettant d'assurer une étanchéité dynamique avec la chemise 2 qui le guide. Le corps 1 est muni de deux brides 6 et 7 à ses extrémités planes et opposées, qui sont fixées au corps 1 par des vis 8 ; des contre-brides 9 et 10 sont associées aux brides 6 et 7 respectives en leur étant reliées par des vis de fixation 11 et d'autres vis, de réglage 5 (figure 2). Les vis de réglage 5 sont filetées dans les brides 6 et 7 et définissent la distance des contre-brides 9 et 10 en butant contre elles ; les vis de fixation 11 sont filetées dans les contre-brides 9 et 10 et maintiennent cette distance à une valeur fixe.

La périphérie du corps 1, entre les faces planes desquelles sont établies les brides 6 et 7, comprend deux nervures 12 et 13 circulaires établies en face des contre-brides 9 et 10, et un renfoncement 14 sépare les nervures 12 et 13, qui communique avec la chemise 2 par des veines 15 d'alimentation. Une veine spécifique 16, mène à un capteur de pression 17 établi sous le corps 1.

La machine comprend encore une vessie 18 élastique de forme annulaire disposée autour du corps 1 central. Ses extrémités sont retenues entre les nervures 12 et 13 et les contre-brides 9 et 10 avec de petits jeux dans la direction du rayon du corps 1. Des joints d'étanchéité 19 et 20 sont comprimés entre le corps 1, la vessie 18 et les brides 6 et 7 au-delà des nervures 12 et 13.

Quand un essai est effectué, un tube 21 est disposé autour de la vessie 18 entre les brides 6 et 7. Du liquide est versé dans la chemise 2, le dispositif est placé entre des plateaux 22 et 23 opposés d'une machine de traction et compression qui n'est pas représentée plus en détail, et les plateaux 22 et 23 sont rapprochés en exerçant une force déterminée respectivement sur le piston 3 et une des brides 7, la plus éloignée de celui-là. Le piston 3, mobile parallèlement à l'axe du tube 21 et du corps 1, traverse l'autre bride 6. L'un d'eux pèse sur le piston 3 et l'autre soutient le corps 1. La force de compression se traduit en une surpression du liquide dans la chemise 2, et dans le renfoncement 14 grâce à la communication offerte par les veines 15. Il en résulte une dilatation de la vessie 18, à pression uniforme, et l'élasticité de la vessie 18 permet de transmettre encore uniformément la pression au tube 21. Les fuites de liquide hors du renfoncement 14 sont arrêtées par les joints 19 et 20 disposés derrière la face interne de la vessie 18.

La figure 2 permet de saisir un détail de construction. Le rétreint axial du tube 21 peut faire apparaître un jeu axial entre lui et les contre-brides 9 et 10, qui peut faciliter l'extrusion de la vessie 18. Il est alors proposé de débloquer les vis de fixation 11 puis d'agir sur les vis de réglage 5 pour repousser légèrement les contre-brides 9 et 10 jusqu'à retrouver le contact avec le tube 21, sans toutefois exercer d'effort axial sur lui.

L'invention a permis d'éprouver des tubes de diamètre de 100 mm et de hauteur 200 mm par des essais pouvant aller jusqu'à 200 bars. Quand un tube 21 a été éprouvé, il est remplacé par un autre en écartant les plateaux 22 et 23 de la machine, en démontant les vis 8 pour ôter les brides 6 et 7, et procédant à des opérations inverses. Tout cela est rapide.

## Revendications

1. Machine d'essai pour appliquer une pression interne uniforme à un tube (21), comprenant un corps (1), un piston (3) coulissant dans le corps, **caractérisé en ce qu'**il comprend une chemise (2) contenue dans le corps (1), dont le piston (3) fait varier un volume en coulissant, une vessie (18) élastique annulaire entourant une périphérie du corps, la périphérie du corps comprenant deux nervures (12, 13) circulaires et un renfoncement (14) séparant les nervures et communiquant avec la chemise (2), la machine comprenant encore deux brides (6, 7) fixées au corps à deux extrémités opposées et comprenant des contre-brides (9, 10) annulaires entourant respectivement les nervures (12, 13), la vessie (18) étant serrée à chacune des deux extrémités opposées entre une des nervures et une des contre-brides.

2. Machine d'essai selon la revendication 1, **caractérisée en ce que** les contre-brides sont unies aux brides par des moyens (11, 5) de réglage d'écartement des contre-brides.

3. Machine d'essai selon la revendication 2, **caractérisée en ce que** les moyens (11, 5) de réglage d'écartement des contre-brides comprennent à la fois des vis de fixation et des vis de réglage de distance.

4. Machine d'essai selon l'une quelconque des revendications 1 à 3, **caractérisée en ce qu'**elle est associée à une machine de traction et compression, sur des plateaux (22, 23) de laquelle le piston (3) et une des brides (7) sont respectivement placés.

## Claims

1. Test machine to apply a uniform internal pressure to a tube (21), comprising a body (1), a piston (3) sliding in the body, **characterized in that** it comprises a liner (2) contained in the body (1), a volume of which being varied by the piston (3) as it slides, an annular elastic bladder (18) surrounding a periphery of the body, the periphery of the body comprising two circular ribs (12, 13) and a recess (14) separating the ribs and communicating with the liner (2), the machine also comprising two flanges (6, 7) fixed to the body at two opposite ends and comprising annular mating flanges (9, 10) surrounding the ribs (12, 13) respectively, the bladder (18) being clamped at each of the two opposite ends between one of the ribs and one of the mating flanges.

2. Test machine according to claim 1, **characterised in that** mating flanges are fixed to flanges through means (11, 5) for adjusting the distance between mating flanges.

3. Test machine according to claim 2, **characterised in that** the means (11, 5) for adjusting the distance between the mating flanges comprise attachment screws and distance adjustment screws.

4. Test machine according to any one of claims 1 to 3, **characterised in that** it is associated with a tensile and compression testing machine, on plates (22, 23) of which the piston (3) and one of the flanges (7) are installed respectively.

## Patentansprüche

1. Prüfmaschine zur Beaufschlagung eines Rohrs (21) mit einem gleichförmigen Innendruck, die Maschine umfassend einen Körper (1) und einen in dem Körper gleitbaren Kolben (3), **dadurch gekennzeichnet, daß** die Maschine einen in dem Körper (1) enthaltenen Mantel bzw. Hülse (2) umfaßt, dessen bzw. deren Volumen der Kolben (3) bei seiner Gleitverschiebung verändert, und einen den Umfang des Körpers umgebenden elastischen ringförmigen Beutel bzw. Blase (18), wobei der Umfang des Körpers zwei Stege bzw. Rippen (12, 13) und eine Vertiefung bzw. Verjüngung (14) aufweist, welche die Stege bzw. Rippen trennt und mit der Mantelhülse (2) kommuniziert, die Maschine des weiteren umfassend zwei an zwei entgegengesetzten Enden des Körpers befestigte Flansche (6, 7) sowie ringförmige Gegenflansche (9, 10), welche jeweils die Stege bzw. Rippen (12, 13) umgeben, wobei der Beutel bzw. die Blase (18) jeweils an jedem der beiden entgegengesetzten Enden jeweils zwischen einem der Rippenstege und einem der Gegenflansche eingeklemmt bzw. eingespannt ist.

2. Prüfmaschine nach Anspruch 1, **dadurch gekennzeichnet, daß** die Gegenflansche mit den Flanschen jeweils durch Mittel (11, 5) zur Einstellung des Abstands der Gegenflansche verbunden sind.

3. Prüfmaschine nach Anspruch 2, **dadurch gekennzeichnet, daß** die Mittel (11, 5) zur Einstellung des Abstands der Gegenflansche sowohl Befestigungsschrauben als auch Schrauben zur Entfernungs- bzw. Abstandseinstellung umfassen.

4. Prüfmaschine nach einem beliebigen der Abstände 1 bis 3, **dadurch gekennzeichnet, daß** sie einer Zieh- und einer Druckpreßmaschine zugeordnet ist, auf deren Anschlußplatten (22, 23) der Kolben (3) bzw. einer der Flansche (7) angeordnet sind.
